# EUROPEAN PATENT SPECIFICATION

(11) **EP 3 421 310 B1**
(45) Date of publication and mention of the grant of the patent: **09.12.2020**
(21) Application number: 17179142.9
(22) Date of filing: 30.06.2017
(51) Int. Cl.: B60T 7/04, B60T 7/06, B60T 8/00, B60T 11/18, G05G 13/00, B60T 11/21, G05G 1/44

(54) **A BRAKE PEDAL LATCHING WITH ELECTRIC STATUS INDICATION SIGNAL**
BREMSPEDALVERRIEGELUNG MIT ELEKTRISCHEM STATUSANZEIGESIGNAL
VERROUILLAGE DE PÉDALE DE FREIN AYANT UN SIGNAL D'INDICATION D'ÉTAT ÉLECTRIQUE

(43) Date of publication of application: 02.01.2019
(73) Proprietor: CNH Industrial Italia S.p.A., 10135 Torino (IT)
(72) Inventor: CONTI, Enrico, 25123 BRESCIA (IT); MAGRINI, Sergio, 41100 Modena (IT)
(74) Representative: CNH Industrial IP Department

(56) References cited:
- EP-B1- 1 099 993
- WO-A1-2017/001992
- GB-A- 2 466 065
- US-A- 4 299 136

## Description

### BACKGROUND OF THE INVENTION

The present invention relates to work vehicles, and, more specifically to work vehicles which include left and right brake circuits.

It is common for work vehicles, such as tractors, to have left and right brake lines to individually control the braking of the left and right wheels. Having separate brake lines for each wheel generally allows for increased steering control, especially in slippery surfaces. A typical left and right braking assembly includes left and right brake circuits which include left and right brake pedals. The braking assembly may also include a locking feature which selectively couples the left and right pedals together so that depressing of one pedal depresses the other as well. Under certain circumstances, for example under greater velocities, it may be advantageous to link both pedals together so that an operator does not mistakenly brake only one wheel, which may cause the work vehicle to experience a sudden divergence in its direction of travel.

Generally, a locking feature may include a pin or bracket that is moveably attached to one pedal, and which slides or rotates to thereby engage or disengage the other pedal. This operation may be accomplished manually by an operator who usually must bend down to use his hands to engage or disengage the locking feature. Some locking features additionally notify the operator of the linked or unlinked position of the pedals. For example, a locking system is known from GB 2,466,065 which discloses a releasable locking mechanism, i.e., a locking pin attached to the right pedal, that selectively locks the left and right pedals together, and further the locking pin contacts a pressure sensor located on the left pedal. The pressure sensor sends a warning signal to the operator when it does not detect engagement of the locking pin. WO2017001992 discloses a locking mechanism adapted to provide an automatic signalling of the lock/unlock status. However, this locking mechanism is visible and not hidden by the pads of the pedals and may create unwanted activation/deactivation of the lock mechanism.

What is needed in the art is a braking system for a work vehicle that is cost-effective and easy to use.

### SUMMARY OF THE INVENTION

The present invention provides a braking system that includes a linking mechanism and a sensor. The linking mechanism includes an axially sliding pin that selectively links and unlinks the pedals together. The pin has a cutout with a cam profile, and the sensor selectively engages with the cam profile of the pin.

The invention in one form is directed to a braking system for a work vehicle. The braking system includes a first brake pedal configured for activating a first brake circuit and a second brake pedal configured for activating a second brake circuit. The braking system is characterized by a linking mechanism that is coupled to the first brake pedal and is configured for selectively linking the first brake pedal and the second brake pedal together. The braking system also includes a sensor that is coupled to the first brake pedal and is configured for sensing an engagement status and a disengagement status of the linking mechanism.

According to the invention the linking mechanism includes a handle pivotally connected to the first brake pedal and a pin moveably coupled to the handle, wherein the pin is moveably coupled to the handle by a connecting rod such that rotation of the handle slides the pin in order to link and unlink the first brake pedal and the second brake pedal.

In yet another exemplary embodiment, the pin is axially moveable by actuation of the handle to selectively couple with the second brake pedal.

In yet another exemplary embodiment, the handle includes a protrusion such that the protrusion at least partially extends beyond an outer periphery of the first brake pedal.

In yet another exemplary embodiment, the protrusion is configured such that the linking mechanism is engageable by a foot of an operator which contacts the protrusion of the handle in order to link the first brake pedal and the second brake pedal, and the linking mechanism is not disengageable by the foot of the operator in order to unlink the first brake pedal and the second brake pedal.

In yet another exemplary embodiment, the pin has a cutout which is associated with the sensor.

In yet another exemplary embodiment, the cutout includes a cam profile, and the sensor is selectively engaged by the cam profile.

In yet another exemplary embodiment, the sensor senses the engagement status upon engaging with the cam profile.

In yet another exemplary embodiment, the linking mechanism further includes a biasing member coupled to the handle and the first brake pedal.

In yet another exemplary embodiment, the biasing member is in the form of a spring which is configured to bias the linking mechanism in an engaged position and a disengaged position.

In yet another exemplary embodiment, the sensor communicates the engagement status to an ECU.

In yet another exemplary embodiment, the linking mechanism is coupled to a back surface of the first brake pedal such that the linking mechanism is located behind the first brake pedal.

In yet another exemplary embodiment, the first brake pedal includes a posterior housing member that has a first bore for receiving at least a portion of the pin such that the pin axially slides within the first bore, and the second brake pedal includes a second bore that can be coaxially aligned with the first bore of the first brake pedal.

In yet another exemplary embodiment, the bore of the second brake pedal receives at least a portion of the pin of the linking mechanism upon engaging the linking mechanism.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a front perspective view of a braking system in the engaged position according to an embodiment of the present invention;
Fig. 2 is a front perspective view of the braking system in the disengaged position;
Fig. 3 is a rear perspective view of the braking system in the disengaged position;
Fig. 4 is a perspective sectional view of the linking mechanism in the disengaged position, taken along line 4-4 in Fig. 3;
Fig. 5 is a rear perspective view of the braking system in the engaged position;
Fig. 6 is a perspective sectional view of the linking mechanism in the engaged position with the right pedal being hidden from view, taken along line 6-6 in Fig. 5; and
Fig. 7 is an exploded view illustrating the linking mechanism.

Corresponding reference characters indicate corresponding parts throughout the several views. The exemplification set out herein illustrates an embodiment, in one form, of the invention, and such exemplification is not to be construed as limiting the scope of the invention in any manner.

### DETAILED DESCRIPTION OF THE INVENTION

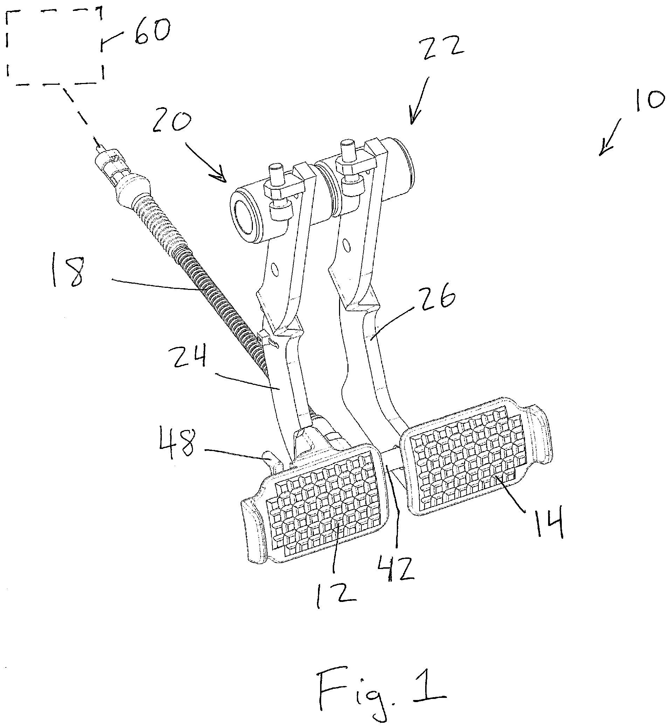

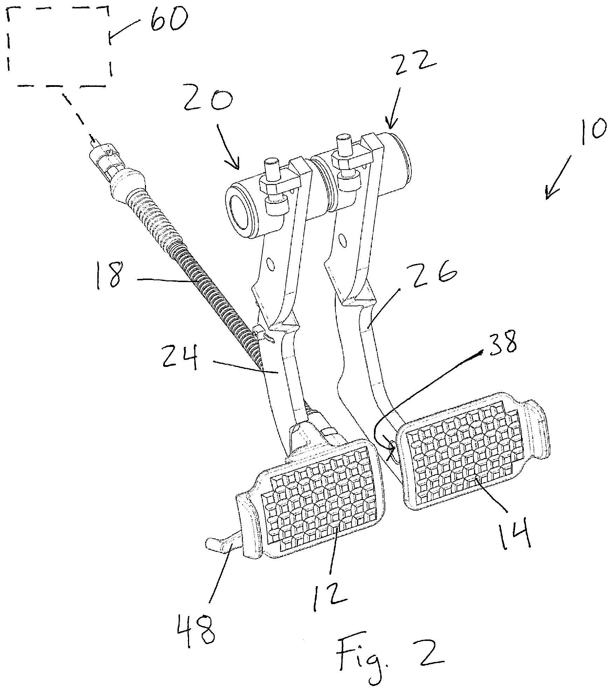

Referring now to the drawings, and more specifically to Figs. 1-3, there is shown a braking system 10 which generally includes left and right brake pedals 12, 14, a linking mechanism 16 that is coupled to the left brake pedal 12, and a sensor 18 that is coupled to the left brake pedal 12. The braking system 10 may be incorporated as part of a work vehicle such as a tractor, a combine, a backhoe, etc.

The left and right brake pedals 12, 14 are configured for activating left and right brake circuits 20, 22 which in turn may individually brake left and right wheels (not shown). The brake pedals 12, 14 may respectively include brake extension members 24, 26 which help translate the motion of the brake pedals 12, 14 to the other components of the brake circuits 20, 22. The brake circuits 20, 22 may include various components, such as electrical components, hydraulic lines, hydraulic cylinders, etc., which are utilized to brake the wheels of the work vehicle. For brevity of description, these components have been hidden from view.

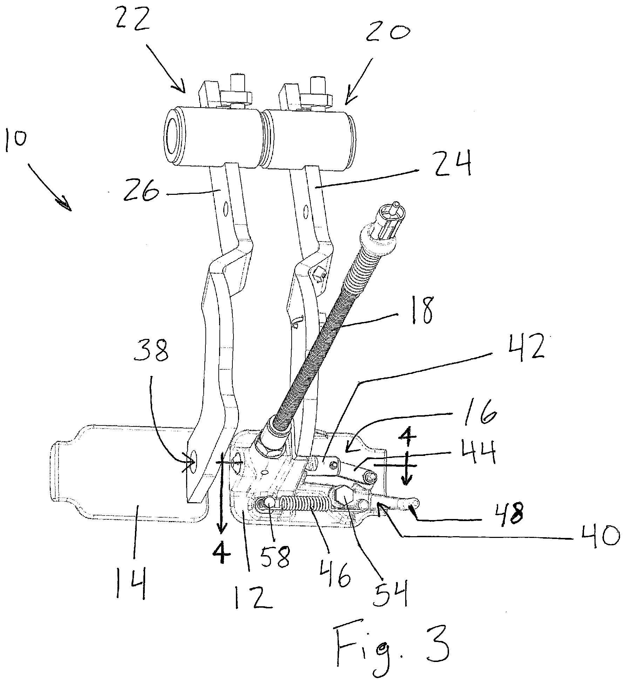

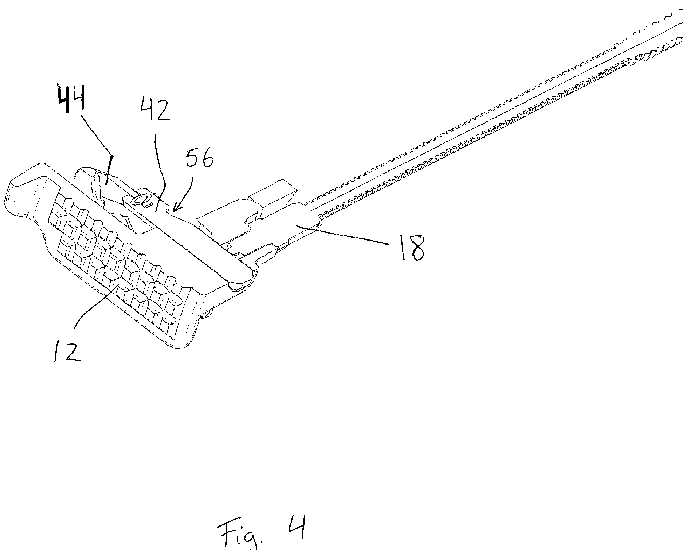

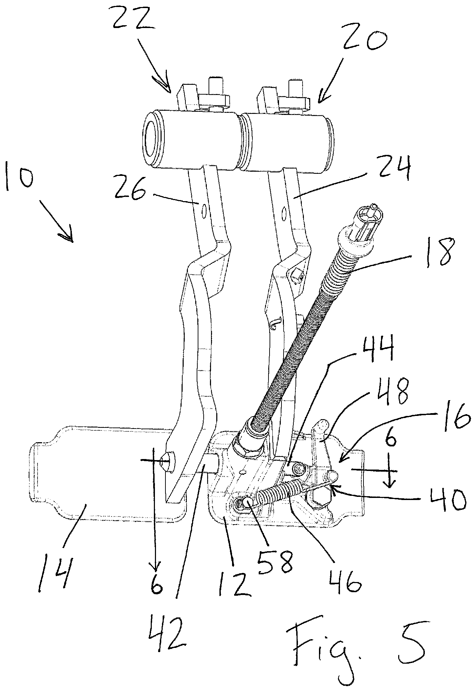

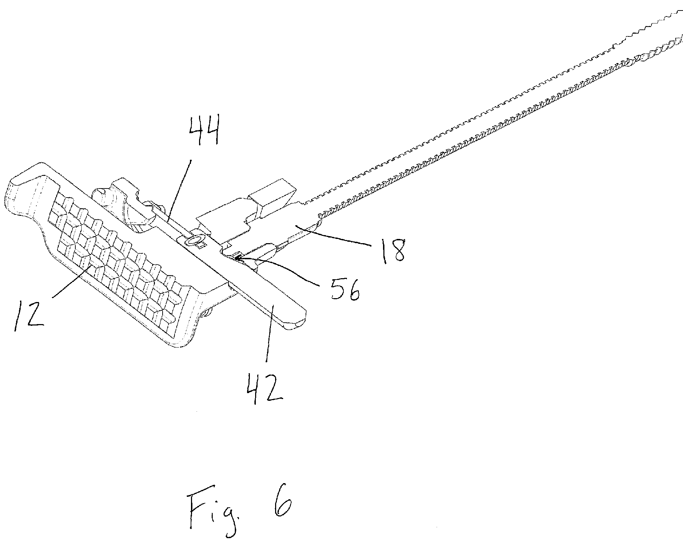

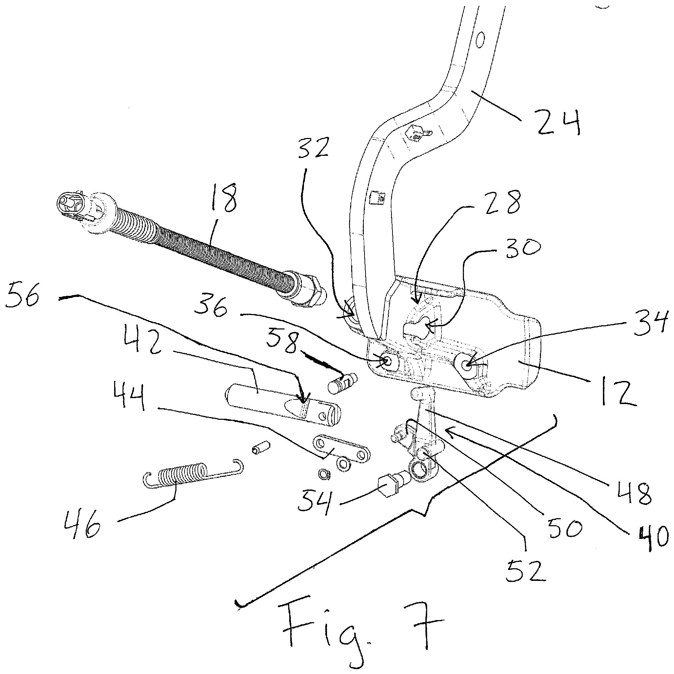

Referring now to Figs. 3-7, there is shown the linking mechanism 16 in greater detail as it is portrayed in the engaged position (Figs. 5 and 6) and in the disengaged position (Figs. 3 and 4). The linking mechanism 16 may be mounted to the backside of the left brake pedal 12 via receiving holes 34, 36 in the left brake pedal 12 (Fig. 7). The linking mechanism 16 generally includes a handle 40 pivotally connected to the back of the left brake pedal 12, a pin 42 moveably coupled to the handle 40 by a connecting rod 44, and a biasing member 46 that is coupled to the handle 40 and the left brake pedal 12. The linking mechanism 16 is configured for selectively linking the brake pedals 12, 14 together. When the linking mechanism 16 is engaged, i.e., in the engaged position, the brake pedals 12, 14 are linked together such that a depression of one brake pedal 12 or 14 moves both of the brake pedals 12, 14 together in unison. When the linking mechanism 16 is disengaged, i.e., in the disengaged position, the brake pedals 12, 14 are in the unlinked from one another.

The handle 40, as shown more clearly in Fig. 7, may have a protrusion in the form of an elongated member 48. The protrusion 48 may at least partially extend beyond the outer periphery of the left brake pedal 12. The protrusion 48 may extend outwardly to an end and/or it may include a rearwardly bent portion at its end. The handle 40 may also include fingers 50, 52 that extend from either side of the elongated member 48. The fingers 50, 52 respectively mount the pin 42 and the biasing member 46. The handle 40 may be pivotally connected to the left pedal 12 at a connection point by a known fastener 54. For example, a screw 54 may be threaded into the receiving hole 34 of the left brake pedal 12.

The body of the handle 40 is located behind the pedal 12 and thereby the protrusion 48 does not extend in front of the left brake pedal 12 or otherwise interfere with the braking process. In other words, as the protrusion 48 does not wrap around or partially extend in front of the left brake pedal 12, and thus the protrusion 48 does not interfere with the travel of an operator's foot as he applies a braking force to depress either pedal 12, 14. This reduces the possibility that the linking mechanism 16 will be undesirably engaged and/or disengaged. Also, as the location of the protrusion 48 of the handle 40 is located further from the hub of the brake pedals 12, 14, the sensitivity to the free play and the mechanical stress on the parts is reduced. This leads to the advantages of avoiding tight tolerances on the parts, reducing manufacturing complexity and cost, and increasing reliability.

In the disengaged position, the protrusion 48 extends outwardly to a side of the left pedal 12 (Fig. 3). In the engaged position, the protrusion 48 extends substantially upwardly, and the end of the protrusion 48 may be located above the topside of the left brake pedal 12 (Fig. 5). In this regard, an operator may contact the protrusion 48 to engage and/or disengage the linking mechanism 16. For example, an operator may use his foot to contact and move the protrusion 48 of the handle 40 in order to link the brake pedals 12, 14 together. Thereby, an operator does not have to remove his hands from the wheel in order to engage the linking mechanism 16. Additionally, for example, an operator may not be able to use his foot to disengage the linking mechanism 16 as the end of the protrusion 48 is positioned substantially above the left brake pedal 12. Instead, the operator may use his hand to move the protrusion 48 of the handle 40 to unlink the brake pedals 12, 14.

The pin 42 is axially moveable by actuation of the handle 40. As the handle 40 is rotated upwardly or downwardly, the pin 42 axially moves forwardly or backwardly, respectively. Thereby, the pin 42 selectively couples with the right brake pedal 14 as it axially slides back and forth. The pin 42 is moveably coupled to the connecting rod 44, and in turn the connecting rod 44 is moveably coupled to the finger 50 of the handle 40. The pin 42 may include a cutout 56 that is associated with the sensor 18. The cutout 56 may also include a cam profile such that the sensor 18 is selectively engaged by the cam profile (Fig. 6). The pin 42 may be composed of any suitable metal, plastic, or composite material.

The biasing member 46 is coupled at one end to the left brake pedal 12 by a link 58, which is fitted into the receiving hole 36 of the left brake pedal 12, and the biasing member 46 is coupled to the finger 52 of the handle 40 at its other end. The biasing member 46 may be in the form of a spring 46 which is configured to provide a biasing force on the linking mechanism 16 in both of the engaged position and the disengaged position. In other words, as the operator moves the handle 40 between the engaged and disengaged positions, the force of the spring 46 may overtake the dead center of the handle 40, and may thereby hold the linking mechanism 16 in either position. Additionally, the spring 46 may be configured to tune the force required in order to change the position of the linking mechanism 16. For example, the operation, e.g. rotating the handle 40, to engage the linking mechanism 16 may be easier compared to the operation of disengaging the linking mechanism 16. Further, for example, the engaging of the linking mechanism 16 may be accomplished by a slight kick on the protrusion 48 of the handle 40 by the operator. In the present embodiment, the spring 46 is a torsion spring 46; however, any suitable spring may be used including a torsion and tension spring. It should be appreciated that the biasing member 46 may not be a spring but instead may be in the form of any desired biasing member such as an elastic member (not shown).

The sensor 18 is coupled to the left brake pedal 12 and is configured for sensing an engagement status and a disengagement status of the linking mechanism 16. The engagement status and the disengagement status respectively correspond to the engaged position and the disengaged position of the linking mechanism 16. The sensor 18 may be in the form of a mechanical sensor 18 with a moveable tip which engages with the cutout 56 of the pin 42. For example, the sensor 18 may be in the form for a mechanical status switch. The tip of sensor 18 may contact the pin 42 as it axially translates back and forth. Thereby, the tip of sensor 18 may move forwardly and rearwardly relative to the left brake pedal 12 as an end of the sensor 18 engages and disengages with the cutout 56 of the pin 42. When the sensor 18 is not engaged with the cam profile of the cutout 56, the sensor 18 provides the disengagement status (Fig. 4). When the sensor 18 engages with the cam profile of the cutout 56, the sensor 18 provides the engagement status (Fig. 6). The sensor 18 may communicate the engagement status and/or the disengagement status to an electronic control unit (ECU) 60 of the work vehicle (Fig. 1). The ECU 60 of the work vehicle may be in the form of any desired control unit, such as a vehicle control unit (VCU). Once the status of the linking mechanism 16 is communicated to the ECU 60 by the sensor 18, the ECU 60 may signal an indicator light and/or a display graphic to notify the operator of the status of the linking mechanism 16. The ECU 60 may further interact with the vehicle brake logic and/or vehicle speed.

Alternatively, the sensor 18 may be a hall effect sensor detecting movement of a magnet positioned on pin 42 to provide engagement status and/or disengagement status to the ECU 60.

The linking mechanism 16 may also include a posterior housing member 28 that has bores 30, 32 to respectively house the pin 42 and the sensor 18. The pin 42 may axially slide within the bore 30, and the sensor 18 may move up and down within the bore 32 as the pin 42 slides back and forth. The posterior housing member 28 may be monolithically formed as part of the left brake pedal 12, or the posterior housing member 28 may be fixedly attached to the left brake pedal 12 (Fig. 7). The left brake extension member 24 may couple to the backside of the posterior housing member 28. Additionally, the linking mechanism 16 may include a bore 38 that is located on the right brake pedal 14. For example, the right brake extension member 26 may include the bore 38 (Fig. 3), or the right brake pedal 14 may additionally include a posterior housing member with a bore (not shown). The bore 38 of the right brake pedal 14 may be coaxially aligned with the bore 30 of the left brake pedal 12 when the brake pedals 12, 14 are at rest or when the brake pedals 12, 14 are linked together. Hence, the linking mechanism 16 is in the engaged position when the pin 42 is at least partially positioned within the bore 38 of the right brake pedal 14, and the linking mechanism 16 is in the disengaged position when the pin 42 is not within the bore 38 of the right brake pedal 14.

It should be appreciated that the linking mechanism 16 and the sensor 18 may be coupled to either brake pedal 12, 14. For example, the linking mechanism 16 may be coupled to the right brake pedal 14 instead of the left brake pedal 12 as shown. In this regard, the various components of the left and right brake pedals 12, 14 would be switched.

The present invention provides that the sensor accurately senses the position of the pin of the linking mechanism in order to notify the operator of the linked and unlinked position of the brake pedals. The present invention also provides that the linking mechanism may be easily engaged by an operator without having the operator remove his hands from the wheel during operation of the work vehicle. The present invention further provides that the linking mechanism is biased such that it is configured to be held in the engaged position and the disengaged position.

While this invention has been described with respect to at least one embodiment, the present invention can be further modified within the limits of the appended claims.

## Claims

1. A braking system (10) for a work vehicle, comprising:
a first brake pedal (12) configured for activating a first brake circuit (20);
a second brake pedal (14) configured for activating a second brake circuit (22);
a linking mechanism (16) coupled to the first brake pedal (12) and configured for selectively linking the first brake pedal (12) and the second brake pedal (14) together; and
a sensor (18) coupled to the first brake pedal (12) and configured for sensing an engagement status and a disengagement status of the linking mechanism (16),
**characterized in that**
said linking mechanism (16) includes a handle (40) pivotally connected to the first brake pedal (12) and a pin (42) moveably coupled to the handle (40), wherein said pin (42) is moveably coupled to said handle (40) by a connecting rod (44) such that rotation of the handle (40) slides the pin (42) in order to link and unlink said first brake pedal (12) and said second brake pedal (14).

2. The braking system (10) of claim 1, wherein said pin (42) is axially moveable by actuation of said handle (40) to selectively couple with the said second brake pedal (14).

3. The braking system (10) of claim 1, wherein said handle (40) includes a protrusion (48) such that said protrusion (48) at least partially extends beyond an outer periphery of said first brake pedal (12).

4. The braking system (10) of claim 3, wherein said protrusion (48) is configured such that said linking mechanism (16) is engageable by a foot of an operator which contacts said protrusion (48) of the handle (40) in order to link said first brake pedal (12) and said second brake pedal (14), and said linking mechanism (16) is not disengageable by the foot of the operator in order to unlink said first brake pedal (12) and said second brake pedal (14).

5. The braking system (10) of claim 1, wherein said pin (42) has a cutout (56) which is associated with a moveable tip of said sensor (18).

6. The braking system (10) of claim 5, wherein said cutout (56) includes a cam profile, and said sensor (18) is selectively engaged by said cam profile.

7. The braking system (10) of claim 6, wherein said sensor (18) senses said engagement status upon engaging with said cam profile.

8. The braking system (10) of claim any of the preceding claims, wherein said linking mechanism (16) further includes a biasing member (46) coupled to the handle (40) and the first brake pedal (12).

9. The braking system (10) of claim 8, wherein said biasing member (46) is in the form of a spring (46) which is configured to bias said linking mechanism (16) in an engaged position and a disengaged position.

10. The braking system (10) of any of the preceding claims, wherein said sensor (18) communicates said engagement status to an ECU (60).

11. The braking system (10) of any of the preceding claims, wherein said linking mechanism (16) is coupled to a back surface of the first brake pedal (12) such that said linking mechanism (16) is located behind the first brake pedal (12).

12. The braking system (10) of claims 2-7, wherein said first brake pedal (12) includes a posterior housing member (28) that has a first bore (30) for receiving at least a portion of said pin (42) such that said pin (42) axially slides within said first bore (30), and said second brake pedal (14) includes a second bore (38) that can be coaxially aligned with said first bore (30) of the first brake pedal (12).

13. The braking system (10) of claim 12, wherein said bore (38) of said second brake pedal (14) receives at least a portion of said pin (42) of said linking mechanism (16) upon engaging the linking mechanism (16).

## Patentansprüche

1. Bremssystem (10) für ein Arbeitsfahrzeug mit:
einem ersten Bremspedal (12), das dazu eingerichtet ist, einen ersten Bremskreis (20) zu aktivieren;
einem zweiten Bremspedal (14), das dazu eingerichtet ist, einen zweiten Bremskreis (22) zu aktivieren;
einem Verbindungsmechanismus (16), der mit dem ersten Bremspedal (12) gekoppelt und dazu eingerichtet ist, wahlweise das erste Bremspedal (12) und das zweite Bremspedal (14) miteinander zu verbinden; und
einem Sensor (18), der mit dem ersten Bremspedal (12) gekoppelt und dazu eingerichtet ist, einen Einrückzustand und einen Ausrückzustand des Verbindungsmechanismus (16) zu erfassen,
**dadurch gekennzeichnet, dass**
der Verbindungsmechanismus (16) einen Hebel (40), der drehbar mit dem ersten Bremspedal (12) verbunden ist, und einen Stift (42) umfasst, der beweglich mit dem Hebel (40) gekoppelt ist, wobei der Stift (42) beweglich mit dem Hebel (40) über eine Verbindungsstange (44) derart gekoppelt ist, dass die Drehung des Hebels (40) den Stift (42) verschiebt, um das erste Bremspedal (12) und das zweite Bremspedal (14) zu verbinden und zu lösen.

2. Bremssystem (10) nach Anspruch 1, wobei der Stift (42) durch Betätigung des Hebels (40) axial bewegbar ist, um wahlweise mit dem zweiten Bremspedal (14) zu koppeln.

3. Bremssystem (10) nach Anspruch 1, wobei der Hebel (40) einen Vorsprung (48) umfasst, so dass der Vorsprung (48) sich zumindest teilweise über einen äußeren Umfang des ersten Bremspedals (12) hinaus erstreckt.

4. Bremssystem (10) nach Anspruch 3, wobei der Vorsprung (48) derart eingerichtet ist, dass der Verbindungsmechanismus (16) durch einen Fuß einer Bedienperson einrückbar ist, der den Vorsprung (48) des Hebels (40) berührt, um das erste Bremspedal (12) und das zweite Bremspedal (14) zu verbinden, und wobei der Verbindungsmechanismus (16) durch den Fuß der Bedienperson nicht ausrückbar ist, um das erste Bremspedal (12) und das zweite Bremspedal (14) voneinander zu lösen.

5. Bremssystem (10) nach Anspruch 1, wobei der Stift (42) eine Aussparung (56) aufweist, die mit einer beweglichen Spitze des Sensors (18) verbunden ist.

6. Bremssystem (10) nach Anspruch 5, wobei die Aussparung (56) ein Nockenprofil aufweist, und wobei der Sensor (18) wahlweise mit dem Nockenprofil in Eingriff steht.

7. Bremssystem (10) nach Anspruch 6, wobei der Sensor (18) den Einrückzustand bei Eingriff mit dem Nockenprofil erfasst.

8. Bremssystem (10) nach einem der vorhergehenden Ansprüche, wobei der Verbindungsmechanismus (16) des Weiteren ein Vorspannelement (46) umfasst, das mit dem Hebel (40) und dem ersten Bremspedal (12) gekoppelt ist.

9. Bremssystem (10) nach Anspruch 8, wobei das Vorspannelement (46) in Form einer Feder (46) ausgebildet ist, die dazu eingerichtet ist, den Verbindungsmechanismus (16) in einer Einrückstellung und einer Ausrückstellung vorzuspannen.

10. Bremssystem (Einzel) nach einem der vorhergehenden Ansprüche, wobei der Sensor (18) den Einrückzustand an eine ECU (60) kommuniziert.

11. Bremssystem (10) nach einem der vorhergehenden Ansprüche, wobei der Verbindungsmechanismus (16) mit einer hinteren Fläche des ersten Bremspedals (12) gekoppelt ist, so dass der Verbindungsmechanismus (16) hinter dem ersten Bremspedal (12) angeordnet ist.

12. Bremssystem (10) nach den Ansprüchen 2-7, wobei das erste Bremspedal (12) ein hinteres Gehäuseelement (28) umfasst, das eine erste Bohrung (30) zur Aufnahme zumindest eines Abschnitts des Stifts (42) aufweist, so dass der Stift (42) axial innerhalb der ersten Bohrung (30) gleitet, und wobei das zweite Bremspedal (14) eine zweite Bohrung (38) umfasst, die koaxial mit der ersten Bohrung (30) des ersten Bremspedals (12) ausgerichtet sein kann.

13. Bremssystem (10) nach Anspruch 12, wobei die Bohrung (38) des zweiten Bremspedals (14) mindestens einen Abschnitt des Stifts (42) des Verbindungsmechanismus (16) beim Eingriff des Verbindungsmechanismus (16) aufnimmt.

## Revendications

1. Système de freinage (10) pour un engin de chantier, comprenant :
une première pédale de frein (12) conçue pour activer un premier circuit de freinage (20) ;
une deuxième pédale de frein (14) conçue pour activer un deuxième circuit de freinage (22) ;
un mécanisme de liaison (16) accouplé à la première pédale de frein (12) et conçu pour relier sélectivement la première pédale de frein (12) à la deuxième pédale de frein (14); et
un capteur (18) accouplé à la première pédale de frein (12) et conçu pour détecter un état de mise en prise et un état de désaccouplement du mécanisme de liaison (16),
**caractérisé en ce que**
ledit mécanisme de liaison (16) comprend un levier (40) relié de manière pivotante à la première pédale de frein (12) et une goupille (42) reliée de manière mobile au levier (40), ladite goupille (42) étant accouplée de façon mobile audit levier (40) par une bielle (44) de manière telle que la rotation du levier (40) fait glisser la goupille (42) afin de relier et dissocier ladite première pédale de frein (12) et ladite deuxième pédale de frein (14).

2. Système de freinage (10) selon la revendication 1, ladite goupille (42) pouvant se déplacer axialement par l'actionnement dudit levier (40) afin de s'accoupler sélectivement avec ladite deuxième pédale de frein (14).

3. Système de freinage (10) selon la revendication 1, ledit levier (40) comprenant une saillie (48) de manière telle que ladite saillie (48) s'étend au moins partiellement au-delà d'une périphérie extérieure de ladite première pédale de frein (12).

4. Système de freinage (10) selon la revendication 3, ladite saillie (48) étant conçue de manière telle que ledit mécanisme de liaison (16) peut être mis en prise par un pied d'un opérateur qui touche ladite saillie (48) du levier (40) afin de relier ladite première pédale de frein (12) et ladite deuxième pédale de frein (14) et ledit mécanisme de liaison (16) ne peut pas être désaccouplé par le pied de l'opérateur afin de dissocier ladite première pédale de frein (12) et ladite deuxième pédale de frein (14).

5. Système de freinage (10) selon la revendication 1, ladite goupille (42) présentant une encoche (56) associée à une pointe mobile dudit capteur (18).

6. Système de freinage (10) selon la revendication 5, ladite encoche (56) comprenant un profil de came et ledit capteur (18) étant mis en prise sélectivement par ledit profil de came.

7. Système de freinage (10) selon la revendication 6, ledit capteur (18) détectant ledit état de mise en prise au moment de la mise en prise avec ledit profil de came.

8. Système de freinage (10) selon l'une quelconque des revendications précédentes, ledit mécanisme de liaison (16) comprenant en outre un élément de rappel (46) accouplé au levier (40) et à la première pédale de frein (12).

9. Système de freinage (10) selon la revendication 8, ledit élément de rappel (46) présentant la forme d'un ressort (46) conçu pour placer ledit mécanisme de liaison (16) dans une position de mise en prise et une position désaccouplée.

10. Système de freinage (10) selon l'une quelconque des revendications précédentes, ledit capteur (18) communiquant ledit statut de mise en prise à une unité de commande électronique (60).

11. Système de freinage (10) selon l'une quelconque des revendications précédentes, ledit mécanisme de liaison (16) étant accouplé à une surface arrière de la première pédale de frein (12) de manière telle que ledit mécanisme de liaison (16) est placé derrière la première pédale de frein (12).

12. Système de freinage (10) selon les revendications 2 à 7, ladite première pédale de frein (12) comprenant un élément de boîtier postérieur (28) qui présente un premier orifice (30) pour recevoir au moins une partie de ladite goupille (42) de manière telle que ladite goupille (42) glisse axialement dans ledit premier orifice (30) et ladite deuxième pédale de frein (14) comprenant un deuxième orifice (38) qui peut être aligné coaxialement avec ledit premier orifice (30) de ladite première pédale de frein (12).

13. Système de freinage (10) selon la revendication 12, ledit orifice (38) de ladite deuxième pédale de frein (14) recevant au moins une partie de ladite goupille (42) dudit mécanisme de liaison (16) au moment de la mise en prise avec le mécanisme de liaison (16).
